# EUROPEAN PATENT APPLICATION

(11) **EP 4 458 458 A1**
(43) Date of publication of application: **06.11.2024**
(21) Application number: 23315161.2
(22) Date of filing: 04.05.2023
(51) Int. Cl.: B01J 8/02, C01B 3/04, B01J 19/24

(54) **AMMONIA CRACKING PROCESS WITH A RECUPERATIVE HEAT EXCHANGE REACTOR**

(71) Applicant: Technip Energies France, 92741 Nanterre Cedex (FR)
(72) Inventor: Liouta, Maria, 92741 Nanterre Cedex (FR); Risseeuw, Izaak Jacobus, 92741 Nanterre Cedex (FR); Walspurger, Stéphane, 92741 Nanterre Cedex (FR)
(74) Representative: McWilliams, David John

(57) **Abstract**

The present disclosure relates to a plant and process low energy intensity cracking ammonia and to a plant. The process comprises:
supplying a gaseous process flow comprising ammonia (204); preheating the process flow at a preheater (205) upstream an ammonia cracker; feeding the process flow as a feed to a reaction zone of the reactor; cracking at least part of the ammonia comprised in the feed at the reaction zone yielding a hot process mixture comprising hydrogen and nitrogen, and providing a heat duty for the cracking and the preheating by a firing at a combustion zone of the reactor. The process comprises a recuperative transfer of heat from the hot process mixture to the process feed at the reaction zone by passing the hot process mixture received from the catalytic reaction zone through an internal recuperative heat exchanger of the cracking reactor.

## Description

### TECHNICAL FIELD AND BACKGROUND

The present disclosure relates to the field of hydrogen production, specifically to a method and plant configured for production of hydrogen by cracking of ammonia.

Hydrogen is an important reagent in many chemical manufacturing processes. In addition, hydrogen is conceded a valuable energy carrier, e.g. for supporting the transition towards greener/renewable energy.

WO2021/257944A1 provides a method for producing pure hydrogen from ammonia and a process for recovering hydrogen from ammonia cracking process via pressure swing adsorption (PSA) in connection with a membrane separation on the PSA tail gas.

The process comprises: pressurizing liquid ammonia, heating liquid ammonia by heat exchange with one or more process hot fluids (flue gas and/or cracked gas), combusting a fuel in a furnace to provide the required energy to the catalyst containing reactor tubes and form flue gas, cracking of heated ammonia into a cracked gas, purifying the cracked gas in a PSA and separate the PSA tail gas into a nitrogen rich retentate gas and recycle a hydrogen rich permeate gas in a membrane separator.

EP3995444 discloses a method for cracking ammonia, producing hydrogen, and generating electrical power comprising electrolysis of water in feed ammonia. The method involves evaporation, pre-heating and cracking of ammonia catalysts at low temperatures (300-700°C) using ammonia synthesis catalysts.

EP 3028990A1 relates to a process for converting ammonia by cracking it into a gas mixture of 75% hydrogen and 25% nitrogen in a fixed bed catalyst. The energy required is generated by burning part of the hydrogen-nitrogen mixture, the generated heat is transfers to the fixed bed via heat exchanger surfaces.

While the known processes/methods can have certain benefits over traditional production of hydrogen from steam reforming of fossil hydrocarbons such as natural gas there remains a need for methods/systems that operate at a reduced energy intensity.

### SUMMARY

Aspects of the present disclosure provide a process for the production of hydrogen, specifically by cracking ammonia. The present disclosure further provides a plant production of hydrogen by cracking ammonia, preferably configured for performing the method as provided herein.

As will be clear from the specification hereinbelow the process/plant has particular application to green hydrogen production, wherein is hydrogen formed from renewable energy instead of fossil fuels. An object of the invention is a method for hydrogen production via ammonia dissociation, also called ammonia cracking, at low energy intensity.

The present disclosure implements heat recuperative cracking technology, advantageously enables NH₃ cracking at comparatively reduced energy intensity.

According to a first aspect, the disclosure relates to a method for hydrogen production via ammonia cracking. The process can be understood as a low energy intensity hydrogen production process. According to a further aspect there is provided a plant production of hydrogen by recuperative catalytic cracking ammonia, preferably configured for performing the method as provided herein. The process can be performed in the plant as provided herein.

The method comprises supplying a gaseous process flow comprising ammonia and preheating the gaseous process flow. Supplying the gaseous process flow can comprise supplying liquid ammonia to a heat exchanger vaporizer or supplying gaseous ammonia directly. The method further comprises feeding the preheated gaseous process flow as a feed to a reaction zone of a recuperative cracking reactor; catalytically cracking at least part of the ammonia comprised in the feed at the reaction zone yielding a flow of a hot process gas mixture comprising hydrogen and nitrogen; and providing a heat duty for the cracking and the preheating the feed by firing of a fuel in the presence of an oxidant at a combustion zone of the reactor; wherein the process comprises a recuperative transfer of heat from the hot process gas mixture to the process feed at the reaction zone by passing the hot process gas mixture received from the reaction zone through a recuperative heat exchanger of the cracking reactor upstream a reactor outlet for outputting the product mixture as a reactor effluent.

It will be understood that the combustion zone of the reactor is not in direct fluid connection with the process fluid. Specifically, the reaction zone and combustion zones can be understood as separate zones of the recuperative cracking reactor that are in thermal heat exchange trough an internal recuperative heat exchanger of the reactor.

The method advantageously provides increased heat integration within the reactor. The process gas exiting the reaction zone, e.g. as exiting by a catalyst bed of a catalyst tube or the like, can be considered as valuable high quality heat source for providing at least part of the required heat for the cracking reaction. Specifically the present process benefits from a heat transfer from hot reaction gasses exiting the catalytic zone back to the catalytic zone. The transferred heat can advantageously directly contribute to a part of the duty for the endothermic cracking of ammonia. This integration can advantageously mitigate losses in high value process heat as compared to conventional processes.

Inventors found that the process having process heat recuperation inside the cracking reactor (e.g. by a heat exchanger integrated in the catalytic reactor) offers the advantage of requiring less energy input. The benefit can reach a 5% (or more) increase in energy efficiency compared to cracking reactor not having the internal process heat recuperation. Inventors found that the benefit can even be up to 25% increase energy efficiency, depending on further heat integration and/or process flow recycling as detailed below.

In a preferred embodiment, the preheating of the gaseous process feed comprises a heat transfer from the reactor effluent to the gaseous feed, thereby. The heat transfer can provide some or even all of the duty for preheating the feed. Preheating using waste heat from the reactor effluent provides further heat integration thereby reducing a need for external heat. As such the increased heat integration improves an efficiency of the hot duty provided by the firing at the combustion zone. At the same time heat exchange from reactor effluent to preheat the feed advantageously cools the reaction mixture for subsequent purification. The precooling can further advantageously reduce and mitigate a need for further downstream cooling. Alternatively, or in addition, part of the heat duty for preheating the feed can be provided using heat of flue gasses exiting the combustion zone of the reactor.

In another or further preferred embodiment, the process further comprising preheating the oxidant (e.g. air) yielding a preheated oxidant flow for firing. The preheater can be an air preheater (APH). In a strongly preferred variation preheating the oxidant comprises a heat exchange from a flue gas off flow from the firing. Preheating the oxidant using heat from a flue gas provides further heat integration and can reduce a use of external heat. The required hot duty for preheating ammonia feed and for the reaction to take place, can be transferred to the system by the fired heater.

In some variations the flue gas flow (e.g. at a convection section of the reactor downstream the combustion zone) can cover the duty (heat requirement) for preheating the oxidant, eliminating a need for external heat duty. Optionally, part or all of a duty for preheating the oxidant can be provided electrically, e.g. by an electric air preheater (e-APH). Advantageously, the electrical energy can be renewable. Inventors found that the air can be heated up to as high temperatures as 800° C with negligible or no impact at the heat flux profile. Thus, fuel consumption can be reduced by using renewable electricity for combustion air preheating.

Preferably, the oxidant is preheated to above 1000 °C. By achieving high temperature at the preheater (e.g. APH), preferably up to 1000°^{C}, a surplus of duty in hot streams can be eliminated and the overall energy efficiency can be improved.

Advantageously all sensible heat for the process can be provided by the firing of the fuel.

The fuel for the firing can comprises or essentially consists of one or more of: ammonia, hydrogen, and a mixture of hydrogen and nitrogen. Firing one or more of: ammonia, nitrogen, and/or mixtures of hydrogen and nitrogen, can reduced or eliminate a need for hydrocarbon fuels, reducing or even eliminating CO₂ emissions. To reduce NOx emissions in the flue gasses a DeNOx unit (e.g. a catalytic reduction (SCR)) can be provided.

The process typically comprises one or more steps to remove impurities from the reaction mixture (e.g. water/NH3) and/or to increase a hydrogen concentration.

In a variation, the process comprises ammonia slip removal from the reactor effluent yielding a purified reactor effluent and an ammonia enriched off flow. The NH₃ slip removal zone can comprise any suitable technology for removing NH₃ (e.g. water wash, adsorption, membrane, temperature swing adsorption (TSA), e.g. by using activated alumina, cryogenic, etc.). The residual, unconverted ammonia can be either recycled back to the cracker or fired to recover the required duty. After the ammonia slip removal, the process gas stream can include 100-2000 ppm ammonia, and preferably less than 100 ppm.

The process can comprise further purifying the reactor effluent, preferably downstream the ammonia slip removal.
The further purification can provide a hydrogen product flow at a purity depending on a required application and at least one gas stream containing nitrogen and hydrogen and that may be used as fuel for combustion. The final product can be high purity H₂ (e.g. 99.9% or higher purity), suitable for fuel cells, but not limited to that application.

The further purification may be provided by any known technology including, but not limited to: pressure swing adsorption unit, a membrane unit, a cryogenic distillation unit, or a combination thereof.

In some embodiments the process, further comprising cracking a part, preferably up to 10%, of the ammonia in the preheated feed at a prereformer upstream the cracking reactor. Inventors found that pre-cracking part of the ammonia in the preheated feed at a pre-reformer upstream the cracking reactor achieves an alternative heat integration scheme by utilizing the surplus of hot duties in the system.

In some embodiments, the process comprises further cooling the comparatively cooled effluent flow prior to the ammonia slip removal. Further cooling the effluent can further recover a heat duty from the firing. In a preferred variation at least a part of the heat of the combustion reaction is recovered at a heat recovery system that consists of a heat exchanger network where at least one heat exchanger uses boiling water to cool down the effluent of the cracking unit.

Typically the process also includes pumping and vaporizing liquid ammonia from a storage to a processing pressure, prior to preheating. Alternatively, a gaseous ammonia feed can be supplied directly. In a preferred variation, the heat for the vaporizing is also supplied by the heat duty from firing the fuel. For example, the duty for vaporizing may be supplied by heat transfer from flue gasses (e.g. in heat a exchanger in a convection section).

According to a further aspect there is provided a plant for performing a production process of hydrogen by recuperative cracking ammonia, preferably the process as described herein.

The plant comprises at least a cracking reactor and a preheater positioned upstream the cracking reactor. The cracking reactor comprises: a catalytic reaction zone; a combustion zone; and an internal recuperative heat exchanger. The preheater is positioned upstream a process inlet of the cracking reactor for feeding the feed to the reaction zone at the suitable temperature. The reaction zone contains a catalyst for catalyzing a conversion of at least part of the ammonia comprised in the preheated feed. The conversion yields a flow of a hot process gas mixture comprising hydrogen and nitrogen. The process gas mixture can further comprise one or more of unreacted ammonia (also referred to as slip) and water. The combustion zone, comprises a combustor and a flue gas conduit, is in thermal contact with the catalytic reaction zone to provide a heat duty for the cracking process by firing a fuel in the presence of an oxidant.. The recuperative heat transfer zone is fluidly connected with the catalytic zone. The recuperative heat transfer zone is configured to heat the feed at the reaction zone by a recuperative transfer of heat from the flow of the hot process mixture prior to releasing the process mixture. The comparatively cooled process mixture, also referred to as reactor effluent is released at a process outlet.

In a preferred embodiment, the preheater preheats ammonia feed to a suitable temperature before entering the ammonia cracking reactor, in a heat exchanger configured to transfer heat from a suitable process stream to the gaseous ammonia feed.

In another or further preferred embodiment, the recuperative reactor can be understood as being comprised as part of a fired process heater comprising a combustion chamber or firebox, connected to a convection section to recover heat from the flue gas flow from the combustion chamber. The combustion chamber provides heat to the reaction zone for catalytic conversion of the ammonia to hydrogen.

In some preferred embodiments, the plant further comprises an oxidant preheater configured to preheat the flow of oxidant prior to the combustion, preferably using heat from the flue gas from the combustion.

Advantageously, the plant can be configured such that, during operation, all sensible heat for the process is provided by heat recovery from the process and flue gas streams.

Depending on a desired product purity the plant can further comprise a processing section for purifying the reactor effluent. As disused above, the processing section can comprising one or more of: an ammonia slip remover and a further purification section, preferably downstream the ammonia slip remover.

In some embodiments, the plant comprises one or more of a pre-reformer fluidly connected between the cracking reactor and the preheater, and configured to crack a part, preferably up to 10%, of the ammonia in the preheated feed;
a cooler configured to further reduce a temperature of the comparatively cooled effluent flow upstream the processing section, said cooler comprising at least one heat exchanger that operates against boiling water, and one or more pump and vaporizer for vaporizing liquid ammonia from a storage to a processing pressure.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1 shows a block scheme of a conventional ammonia cracking reaction process for hydrogen production;
FIG 2 shows a block scheme of the recuperative ammonia cracking process according to the disclosure;
FIG 3 shows a block scheme of the recuperative ammonia cracking process according to the disclosure;
FIG 4 depicts a cross-section drawing of an ammonia cracking reactor;
FIG 5 provides cross-section views of three different exemplary recuperative ammonia cracking reactors;
FIG 6 provides cross-section views of two further exemplary recuperative ammonia cracking reactors;
FIG 7 provides cross-section views of yet two further exemplary recuperative ammonia cracking reactors;
FIG 8 provides a cross-section view of still yet further exemplary recuperative ammonia cracking reactor; and
FIG 9 provides cross-section views of exemplary catalyst tubes for use in an ammonia cracking reactor.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

As used herein a Recuperative Heat Exchange between two fluids can be understood as being related to a heat exchange across a wall separating flow paths. In contrast a Regenerative Heat Exchanger has a single flow path, which the hot and cold fluids alternately pass through.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

Ammonia cracking is an endothermic reaction. Achieving sufficiently high conversion to hydrogen requires high outlet temperatures, typically of at least 550°C. The ammonia cracking or decomposition reaction can be described as:

2NH₃(g) ⇆ N₂(g) + 3 H₂(g) ; ΔHᵣₓ = 46 kJ/mol NH₃

Conventional ammonia cracking (also known as decomposition or dissociation or dehydrogenation_ process scheme results in an energy intensity of up to 40-45 kWh/kg H₂ produced, when calculated on the Lower Heating Value (LHV) of the total incoming energy (i.e. sum of chemical, thermal, and electrical) needed to obtain hydrogen. With a theoretical LHV of 33.32kWh/kg H₂) e an energy efficiency (from NH₃ to H₂) of conventional routes is of about 74.0 to 83.3%. The conventional schemes result in excess energy use in the process, which is mainly leading to production of export steam and thereby improving the total thermal energy efficiency (from NH₃ to H₂ & export steam).

A conventional fired ammonia cracking reactor consists of a catalytic reactor and a combustion unit in an enclosure. In the combustion unit a fuel reacts with oxidant (air) to form a hot flue gas. In the catalytic reactor ammonia feed is heated and is converted into hydrogen - nitrogen effluent. Heat from the combustion unit and hot flue gases is transferred via the enclosure to the reactor. The amount of heat transferred from the combustion unit is equal to the amount of heat required for heating ammonia and for the ammonia cracking reaction.

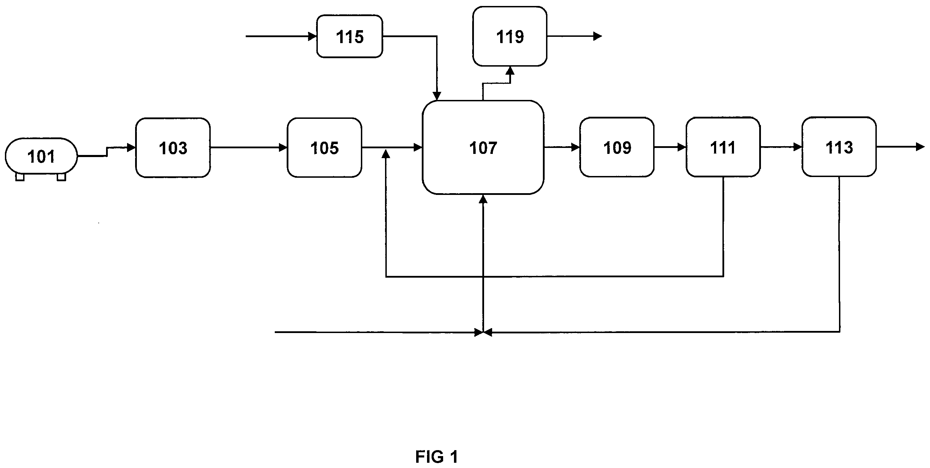

Figure 1 illustrates a prior art ammonia cracking process, wherein stored liquid ammonia 101 is being vaporized in the evaporator 103 and preheated at the suitable temperature 105, before entering the ammonia cracking reactor 107. The product gas is a H₂ and N₂ mixture, containing some unreacted ammonia, residual water, and some other minor contaminants. The hydrogen and nitrogen product gas are cooled down 109 before entering the ammonia slip removal unit 111. After the ammonia slip removal the remaining ammonia can be recycled back to the reactor. Hydrogen may be recovered from the product gas at the final desired purity, by various means of purification 113. The required hot duty for the reaction and process is transferred to the system by the combustion chamber or fired box of the reactor 107, wherein the suitable fuel gas is combusted together with the oxidant, preferably air, which has been preheated in the combustion air preheater 115. The flue gas flows at the convection section 119, where a part of the heat of the combustion reaction can be recovered.

The ammonia cracking process includes at least the following units: ammonia storage tank 101, ammonia vaporization 103, at least a feed pre-heater 105, the recuperative cracking unit 107 that consists of a catalytic reactor, a combustion system, a combustion chamber or fired box that is connected to a convection section 119 where at least a part of the heat of the combustion reaction is recovered, a heat recovery system 109 that consists of a heat exchanger network where at least one heat exchanger uses boiling water to cool down the effluent of the cracking unit 107.

The recuperative ammonia cracking process further comprises optionally an ammonia removal unit 111 where unconverted ammonia is separated from the process gas and is returned after compression upstream of the cracking unit 107. The process gas is then further purified in a purification 113 that may be a pressure swing adsorption unit or a membrane unit or a cryogenic distillation unit, or a combination of any of the 3 cited options, that provides the hydrogen product at desired purity and at least one gas stream containing nitrogen and hydrogen and that may be used as fuel for the combustion system of the cracking unit 107, in complement to the trim fuel or make up fuel that consists of a part of the NH₃ feedstock, hydrogen or any fuel available for the complement of the energy needed for the cracking unit operation. The combustion Air is supplied optionally after pre-heating 115 for instance against the combustion gas in the convection section 119.

The design of the state of the art ammonia cracking process as shown in FIG 1 makes use of a catalytic reactor that is heated up by combusting part of the product or part of the fuel or a mixture of these and possibly a complementary trim fuel. The ammonia cracking reaction being endothermic and favored at high temperature and low pressure, the process economics usually prompt for a catalyst outlet temperature of above 550°C, most preferably above 650°C to achieve a high once through conversion rate. It is therefore an aspect of the state of the art design to collect the converted process gas at a high temperature, above 650°C and provide a system to cool it down against boiling water in order to recover the sensible heat in the form of steam. This method of recovering the converted gas sensible heat has the advantages to offer compact equipment for the heat exchange, relative simple material and low surface area due to the high heat flux in such boiler equipment. Still a further advantage is that the steam may be used for indirectly pre-heating the feed or vaporizing the feedstock, and/or used in a rotating equipment to entrain compressors and pumps, or even use in steam turbine to produce power or still further exported to neighboring units. A disadvantage such state of the art cracking process is the conversion efficiency of ammonia to hydrogen. While the overall thermal efficiency of the process may be relatively high when the steam is accounted for as an energy carrier, a considerable amount of energy contained in the ammonia feedstock is not obtained in the form of hydrogen, the desired product for further utilization as storable, transportable medium for decarbonized application. A further disadvantage is that the steam system needed for the heat recovery of the state of the art consists of a network of pipes and vessels (boilers and steam drum) that are relatively bulky, require maintenance, and may represent a substantial part of the capital investment for building and maintaining the cracker. Still a further disadvantage is that the steam system requires considerable amount of fresh water that needs to be treated with various processes and chemicals to achieve boiler system specifications, especially for steam that is produced for further export to neighboring process units.

In line with an object of the invention the method advantageously realizes hydrogen production via ammonia dissociation also called ammonia cracking at low energy intensity. The proposed technology provides reduced energy intensity NH₃ cracking by implementing a heat recuperative cracking technology.

The present disclosure relates to a recuperative ammonia cracking process that includes at least the following elements: a feed pre-heater and a recuperative catalytic cracking unit that comprises a catalytic zone/reactor, a recuperative heat exchanger to exchange heat from the reactor effluent stream to the reactor inlet stream and a combustion unit in an enclosure.

The preheated gaseous ammonia feed 206 is routed to a reaction zone of a recuperative cracking reactor; catalytically cracking at least part of the ammonia comprised in the feed at the reaction zone yielding a flow of a hot process gas mixture comprising hydrogen and nitrogen; and providing a heat duty for the cracking and the preheating the feed by firing of a fuel in the presence of an oxidant at a combustion zone of the reactor; wherein the process comprises a recuperative transfer of heat from the hot process gas mixture to the process feed at the reaction zone by passing the hot process gas mixture received from the reaction zone through a recuperative heat exchanger of the cracking reactor upstream a reactor outlet for outputting the product mixture as a reactor effluent 208.Thereactor effluent can be used at heat exchanger 205 to preheat the ammonia feed 204, yielding a preheated feed 204 and a comparatively cooled reactor effluent 210.

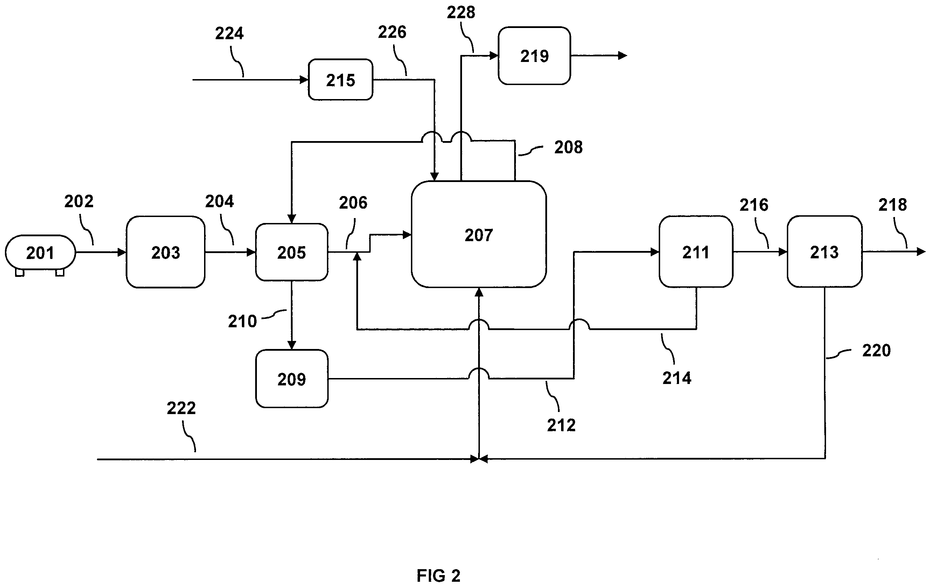

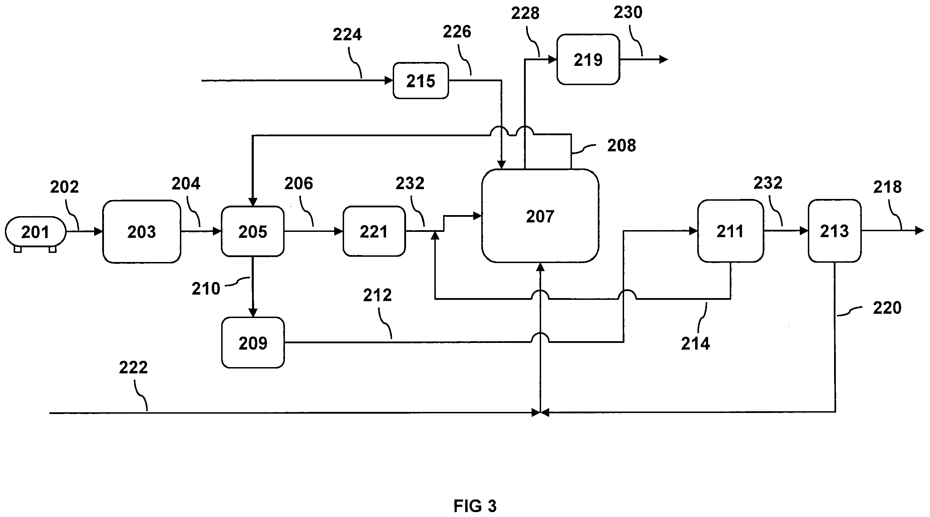

In some embodiments, e.g. as depicted in FIG 2 and 3, the system further comprises one or more of: an ammonia storage tank 201, ammonia vaporization 203, a heat recovery system 209 (e.g. comprising a boiler operating against boiling water) yielding a further cooled flow 212, a convection section 219 connected to the enclosure where at least a part of the heat of the combustion is recovered, an ammonia slip removal 211, and a purification system 213 for providing an hydrogen output 218 at a desired purity.

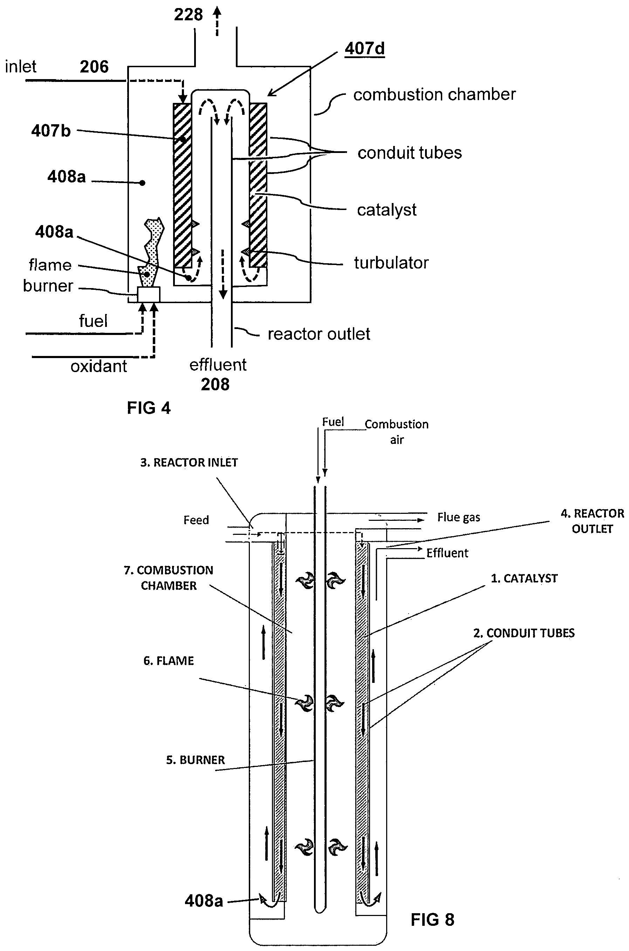

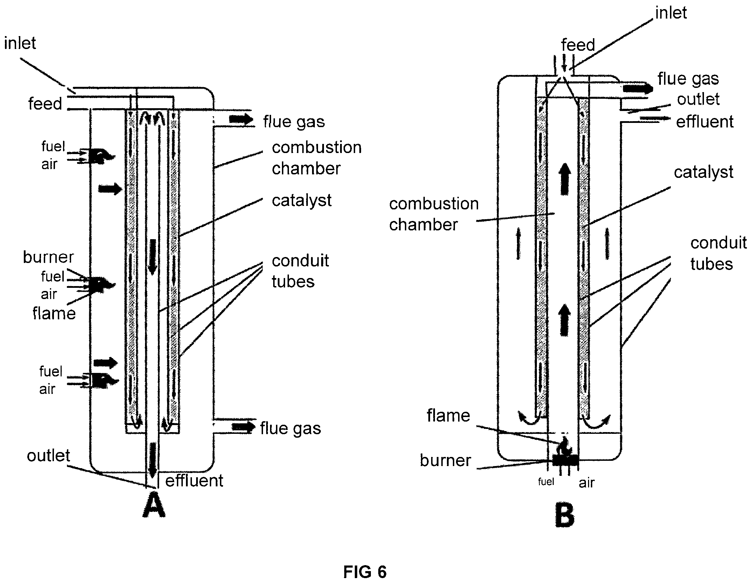

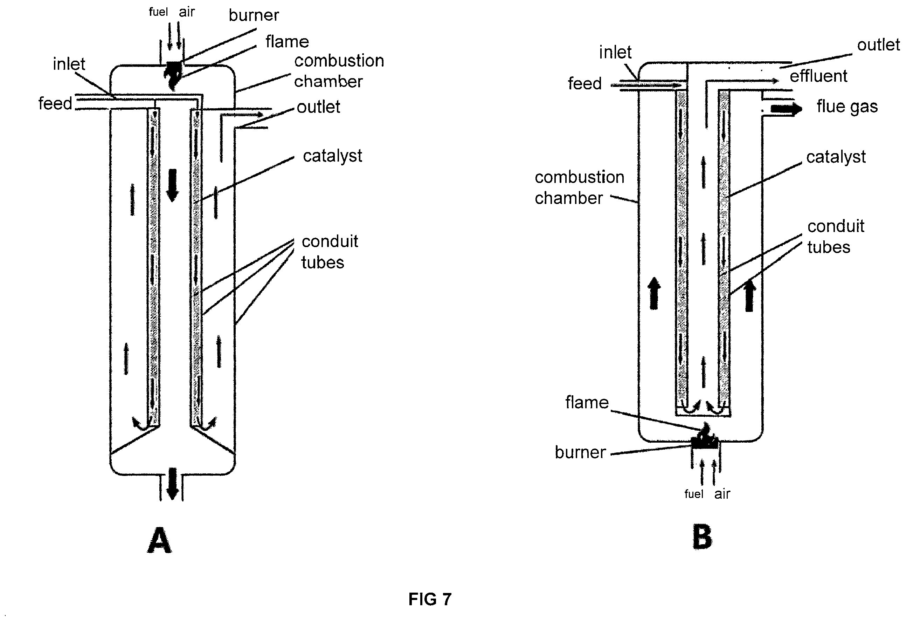

All compartments of the catalytic reaction zone and the internal recuperative heat exchanger of the catalytic reactor 207 are included in a pressurized environment which ensures the suitable process conditions for the ammonia cracking reaction to take place. These and further aspects of the cracking unit including the catalytic zone/catalytic reactor will be described with reference to FIGs 4-9.

In some embodiments, e.g. as shown in FIG 2, stored liquid ammonia (stream 202) pumped from tank 201 to a desired operating pressure and vaporized 203, before entering the cracking reactor 207. In a preferred variation the ammonia is anhydrous ammonia.

One method to vaporize liquid ammonia is by including the required vaporization unit to the overall hot duty that is deployed in the combustion zone, for instance by means of heat recovery in the convection section, or by heat exchange with the process gas downstream the cracking reactor. Another method may include feed vaporization assisted by a heat pump, i.e. by using electrical power and a source of low level heat.

The recuperative ammonia cracking unit 207 comprises a combustion zone or combustion chamber, a catalytic reactor that is designed such that the heat of combustion is transferred to the catalytic reactor and a recuperative heat exchanger, in fluid connection with the catalytic zone, to exchange heat from the reactor catalyst outlet stream 208 to the reactor inlet stream 206. The ammonia cracker may comprise a fired heater that comprises two sections: the radiant section and the convection section. The radiant section includes at least one burner, which is the main equipment that produces the required hot duties by fuel combustion and a number of catalyst tubes. While, the convection section 219, comprises a number of heat exchangers for recovering the heat. The reactor temperature at the catalyst outlet can reach up to 650-800°C.

The process gas exiting the catalyst section of the catalyst tube can be considered as valuable high energy heat source for providing the required heat for the reaction. The recuperative catalytic conversion due to the internal heat exchange, can decrease the external heat supply. The technology according to the present disclosure can advantageously use the heat from the reactor effluent and the heat from the combusted gas to provide the required heat for vaporizing ammonia feed and pre-heating ammonia feed to the reactor inlet conditions. The reactor ensures the catalytic conversion of the ammonia to hydrogen and nitrogen gas mixture, providing the necessary energy by burning the fuel, e.g. off gas, part of the ammonia feedstock and/or hydrogen in a combustion chamber where the reactor is located.

Ammonia causes corrosion to the sieve, thus it can be optionally separated at a pretreatment step upstream to H₂ purification unit 213. One method to remove the residual ammonia slip is by water wash. Another method includes adsorption by utilizing zeolite, activated carbon, or any other suitable solid adsorbent. A regeneration unit can also be included to regenerate sorbent. A further option may include temperature swing adsorption (TSA) by using activated alumina. These technologies act efficiently for low-level ammonia streams. After the ammonia slip removal unit 211, the process gas stream 232 can include 100-2000 ppm ammonia, and preferably less than 100ppm. Off flow 214 from the slip removal 211 can be recycled back to for further cracking.

High temperature Cr-Ni steels are vulnerable to nitriding corrosion during exposure to ammonia. For these steels presence of hydrogen may reduce the nitriding corrosion. To suppress corrosion risk by nitriding of the reactor, a small amount of hydrogen between 1-5% could be recycled back to the ammonia feed to the reactor.

The process gas can then further purified in a purification 213 that may be a pressure swing adsorption unit or a membrane unit or a cryogenic distillation unit, or a combination of any of the mentioned alternative, that provides the hydrogen product 218 at purity depending on the required application and at least one gas stream containing nitrogen and hydrogen 220. Stream 220 may be used as fuel for the combustion system of the cracking unit 207, in complement to the trim fuel or make up fuel that consists of a part of the NH₃ feedstock, hydrogen or any fuel available for the complement of the energy needed for the cracking unit operation. The combustion oxidant (e.g., air) is supplied optionally after pre-heating 215 for instance against the flue gas flow 228 in the convection section 219.

In some embodiments, (not indicated) part of product flow 218 can be recycled back into the feed to the cracking reactor. To mitigate corrosion a volumetric concentration of H2 in the feed can ≤ about 5%, preferably in a range of 1-5%.

FIG 3 illustrates an embodiment that further comprises cracking a part, preferably up to 10%, of the ammonia in the preheated feed 206 to a pre-reformer 221 upstream the cracking reactor. The formed partially pre reformed flow 232 is fed as a process feed to the cracker reactor.

As best seen in FIG 4-8 the catalytic zone and recuperative heat exchanger can be conceptually interpreted as a catalytic reactor 407d comprising a first and a second channel that combinedly provide the catalytic zone and the recuperative heat exchange. Flows are indicated by dashed arrows. As shown the catalytic reactor can be regarded as being housed in an enclosure 407d (e.g. combustion chamber) that further comprises at least one burner for firing fuel in the presence of oxidant. The catalytic reactor has a catalytic zone comprising a catalyst where the ammonia cracking reaction takes place.

The catalyst selected may be a Nickel-based structured catalyst, and may contain other metals such as but not limited to Cobalt, Ruthenium and mixed metal oxides. The catalyst may be provided as any shape, preferably as a washcoat on a large surface area macroscopic structure placed in the cracking reactor for recuperative catalytic conversion of the process gas, affording operating at large throughput with low pressure drop.

The product gas is mixture with H₂ and N₂ with a 3:1 molar ratio, containing some unreacted ammonia, residual water, and some other minor contaminants. The cracking can be performed between at temperatures above 400°C, e.g. up to about 1200°C. For example, in a range of 400 - 850 °C. The pressure can be 1 - 100 barg.

The catalytic zone 407b can be regarded a first channel (e.g. bound by conduit tubes or plates) that is fed from an inlet and that opens into a second channel that is in thermal heat exchange (e.g. across a tubular wall) with the catalytic zone, and that opens at an outlet for outputting the product mixture as a reactor effluent 208 to downstream processing section of the plant for further processing and/or heat recuperation.

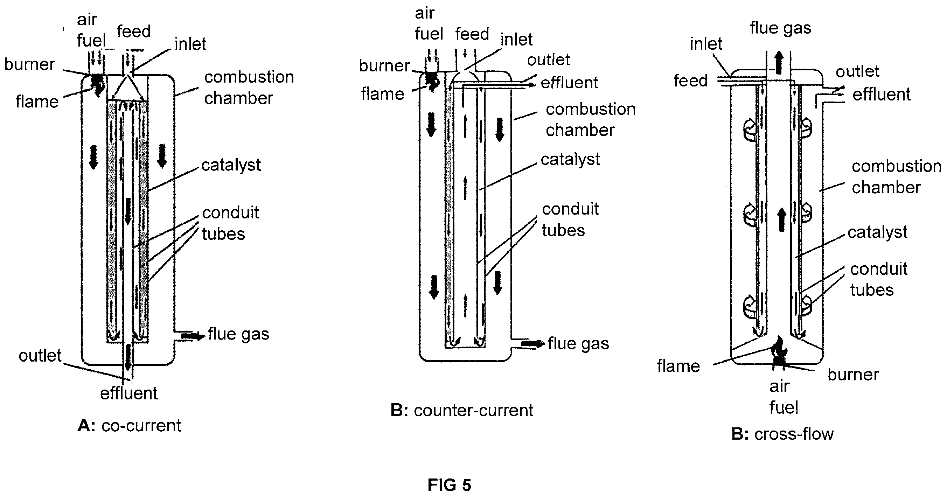

The combustion unit including hot flue gas (stream 228) can be co-current, countercurrent or cross flow direction with the ammonia stream in the reactor 207. Many orientations possible, e.g. as shown in Figs 5-8

The hot process mixture received () from the reaction zone (flow 408a) in the recuperative heat exchanger can have a single pass (e.g. as shown in FIG 5B-C, 6B, 7A-B, and 8) or can have two or more passes (e.g. one or more return passes as shown in FIGs 4, 5A, and 6A).

The combustion unit including hot flue gas can have a single pass or can have two or more passes. Further, the hot flue gas pass may contain an internal fuel and/or oxidant pipe that can be in co-current or countercurrent direction with the ammonia feed in the reactor (in thermal heat exchange with flue gas), as shown in Figure 8. Providing multiple passes and/or an internal fuel/oxidant pipe can improve a heat efficiently of the cracker.

The reaction conduit contains the reactor inlet for feed, the catalyst and the product gas stream, which are in thermal heat exchange (radiative and/or convective) with the combustion chamber. The catalyst conduit can refer to the inner tube, and be characterized as a hollow elongated body, used as a carrier for moving fluids. The shape (cross section) of the conduit tubes may vary (round tube, elliptical, etc.), by this means, part of the required reaction duty can be recovered and achieve higher heat recuperation. This concept maximizes heat recovery upstream the reactor outlet by applying a specific, innovative geometry and mechanical characteristics.

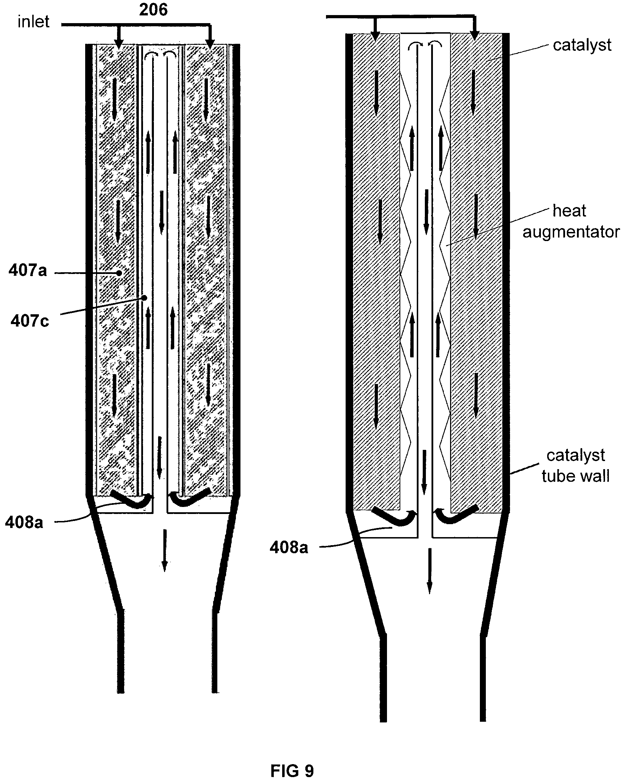

Internal heat transfer efficiency may be further improved by using any heat transfer enhancement techniques (e.g. heat augmentation tool, and/or turbulator) at the catalyst conduit which is in contact with the radiant section. The thermohydraulic performance of the reactor's system can be improved by using any means that help create or maintain turbulent flow alongside the tube section of the heat exchanger reactor. For example, this can be achieved by a turbulator that fits the geometry, size and needs of each particular process. The heat transfer augmentation tools may be, but are not limited to, longitude fins, twisted tape, coiled rod inside the tube or even coil wired extending (e.g. welded) outside along the conduit tube, and/or the catalyst tube. An example of such configurations are shown in FIG 4 and 9.

Fired process heaters can be used to cover the duties required for heating liquids and gases and for vaporization duties. Inside the fired heater the suitable fuel gas (stream 222) is combusted and the flue gas (stream 230) at the convection section 219 contains the required duty. The process streams inside the fired heater are heated by radiative and convective heat transfer by the hot combusted fuel gases. A typical fired heater comprises:
- Radiant section
- Convection section to recover heat
- Burners
- Combustion Air preheat (APH): wherein ambient air used for combustion can be heated up to high temperature in order to optimize the heat exchange in the convective section of the fired heater
- Internal tubes
- Stack

Fuel gases can be H2/N2 mixture, pure hydrogen, ammonia, hydrocarbons, etc. or fuel mixture. Combustion of process offgas, hydrogen or H2/N2 mixture contribute to CO2 emissions reduction.

In some embodiments the catalyst is located in-between the recuperative heat exchanger and the combustor. Alternative configurations are possible. Figures 5, 6, 7 and 8 indicate potential configurations of the catalyst tube and flow patterns.

In some embodiments the catalytic reactor may be arranged in tubular configuration comprising of an assembly of concentric tubes hosting the ammonia feed and catalytic system, connected to a concentric tube assembly containing oxidant and fuel mixing and combustor. Such a system may be configured as a single tubular reactor or may be configured as multitubular assembly for treating large volumes of gas.

Reference is made to WO2021198242 which is hereby incorporated by reference. WO2021198242 discloses a combustion heater for providing controlled heat to an endothermic reaction process that can be used for the present disclosure The combustion heater comprises an integrated burner) to yield a hot burner exhaust gas flow from burning a first fuel. The burner exhaust gas mixed with oxidant flows to a flue gas outlet along a flue gas flow path. Provided to the combustion chamber at a position outside a direct reach of flames from the burner is a secondary fuel conduit with a plurality of nozzles from which a second fuel is transferred into a flow along the said flue gas flow path. The resulting combustion of the second fuel can be used to provide controlled heat to the endothermic reaction operated in a reaction conduit that is in thermal heat exchange with the combustion chamber.

Alternatively or additionally, the reactor may also be configured as plate type heat exchange reactor or a variation of plate/tube exchanger. For details reference is made to WO2018104526, which is hereby incorporated by reference.

Still in an alternative configuration the catalytic reaction may be conducted in a multi tubular reactor where the catalyst is loaded. The catalyst tubes may be located inside the furnace chamber in such a way that the combustion gas flows through the furnace chamber and heat exchange occurs between the flue gas (hot source) and the process fluid being cracked in the tubes (cold sink).

Reference is made to WO2018077969A1 (which is hereby incorporated by reference) describing a design of catalyst tubes, suitable for multitubular reactor, such as a steam reformer but also in the present context as a catalytic reactor for ammonia cracking. FIG 9 provide cross-section views of exemplary catalyst tubes for use in an ammonia cracking reactor. The catalyst tube wall is in heat exchange with the combustor. Note that the combustion zone (e.g. industrial process heater) may comprise a plurality (e.g. a bundle) of the catalyst tubes.

It will be appreciated that for a concepts the flue gas is not in direct fluid contact with the ammonia cracking catalyst and the reactor effluent.

Due to the recuperative heat transferred, the required amount of heat transferred from the combustion unit is less than the amount of heat required for heating the ammonia and for the ammonia cracking reaction. Thus, minimization of firing and consequently reduction of the required fuel can be achieved.

Hydrogen may be recovered from the product gas at the final desired purity, by various means. For instance pressure swing adsorption (PSA), membranes, electrochemical compressors are capable of isolating hydrogen from N2 and residual NH3 and contaminants. When a PSA is used, the residual PSA off gas can be fired. For membranes or electrochemical compressors, the retentate rich in N2 can be used as fuel. Pure H2, part of H2 product and/or H2/N2 mixture and/or NH3 can also be used as complimentary fuels in the combustion zone of the ammonia cracker.

The NH3 slip removal unit can comprise any suitable technology for removing NH3 (e.g. water wash, absorption, adsorption, membrane, TSA, cryogenic, etc.). The residual, unconverted ammonia can be either recycled back to the cracker or fired to recover the required duty. Downstream the H2 purification unit may be comprising PSA unit or absorption, etc., in which high purity H2 is obtained. The final product can be high purity H2 99.9% or higher purity, suitable for fuel cells, but not limited to that application.

An alternative option of the described Figure 2, is shown in Figure 3. At this case, part of the process gas (stream 206) is being converted in the prereformer 221, and the unreacted ammonia with the mixture of the product gas (stream 232) continues to the recuperative ammonia cracking reactor 207. This method, achieves an alternative heat integration scheme by utilizing the surplus of hot duties in the system.

The example below refers to an ammonia cracking system, wherein the catalytic ammonia cracking reactor operates at 20 barg and 500C-850°C.

The conventional process scheme comprises: vaporizing anhydrous liquid ammonia and heating up the feed, by heat exchange with the flue gas, before entering the reactor, combusting the fuel in a fired heater to provide the required energy to the catalyst containing reactor tubes, cracking of ammonia into a hydrogen/nitrogen mixture, and a purification system for hydrogen separation. The fuel comprises off gas, part of the pure hydrogen product and/or hydrogen make up fuel. This scheme is compared with the second case, which includes heat integration between one or more process hot fluids and the gaseous feed ammonia entering the reactor. The recuperative scheme refers to the heat integration inside the ammonia cracking reactor, wherein heat exchange occurs between the hot process gas exiting the catalytic zone of the reactor and the process gas being converted upstream and/or in the catalytic zone. The recuperative scheme case includes not only the reactor's internal heat recuperation, but also the above mentioned system's heat integration. By this proposed process scheme, it is possible to achieve the optimum heat integration in the system, in order to minimize the external energy input.

| | **Conventional scheme** | **Conventional scheme with heat integration** | **Recuperative scheme** |
|---|---|---|---|
| Mass Balance (kg/h) | | | |
| NH₃ feed+fuel (kg/h) | 35.1 | 29.1 | 26.1 |
| H₂ production (kg/h) | 4.4 | 4.4 | 4.4 |
| N₂ production (kg/h) | 20.2 | 20.2 | 20.2 |
| H₂ yield (kg H_{2,product}/kg NH₃) | 0.124 | 0.150 | 0.167 |

| Energy requirements | | | |
|---|---|---|---|
| Energy efficiency (kWh/kg H₂) | 44 | 37 | 34.1 |

The energy efficiency difference among an example of the cases is summarized in the above table. The total energy efficiency is defined as the total kWh NH₃ feed consumed (LHV) and the electrical consumption (kWh) per kg exported H₂. In all cases, the same process conditions have been considered, and the heat and material balanced is based on 4.4 kg/h hydrogen production.

It will be understood that in some embodiments, the cracking reactor may comprise an assembly of tubes or an assembly of plates, or an assembly of tubes and plates, hosting the cracking catalyst, that receive heat from the combustion and heat from the hydrogen and nitrogen mixture.

The catalytic reactor tubes/plates can vary in geometry and structure depending on the needs of each process. For example, the tubes can have a cross-section shape including but not limited to round, oval, rectangular, cylindrical or combinations thereof.

Optionally, there can be multiple, e.g. two, three, or more, passes of the gases in the recuperative catalyst reactor, e.g. by respective conduits (e.g. catalyst tubes) connected in series.

In some variations, the catalytic tube can comprise multiple, e.g. three, channels in parallel and/or series to maximize the heat that can be recovered.

In yet further embodiments, heat transfer augmentation tools are used for heat transfer enhancement alongside the catalyst tubes to maximize the heat which can be transferred from the radiant section of the fired heater to the catalyst tubes. These may be, but are not limited to, longitude fins, twisted tape, coil wired welder outside along the catalyst tube, etc.

For the purpose of clarity and a concise description, features are described herein as part of the same or separate embodiments, however, it will be appreciated that the scope of the invention may include embodiments having combinations of all or some of the features described. Of course, it is to be appreciated that any one of the above embodiments or processes may be combined with one or more other embodiments or processes to provide even further improvements in finding and matching designs and advantages.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. A hydrogen production process comprising ammonia cracking, the process comprising
supplying a gaseous process flow comprising ammonia, preferably by vaporing liquid ammonia at a heat exchanger vaporizer or by supplying gaseous ammonia directly;
preheating the gaseous process flow at a preheater upstream an ammonia cracking reactor;
feeding the preheated gaseous process flow as a feed to a reaction zone of the ammonia cracking reactor;
catalytically cracking at least part of the ammonia comprised in the feed at the reaction zone yielding a flow of a hot process mixture comprising hydrogen and nitrogen; and
providing a heat duty for the cracking and the preheating by firing of a fuel in the presence of an oxidant at a combustion zone of the reactor;
wherein the process comprises
a recuperative transfer of heat from the hot process mixture to the process feed at the reaction zone by passing the hot process mixture received from the catalytic reaction zone through an internal recuperative heat exchanger of the cracking reactor.

2. The process according to claim 1, wherein preheating the gaseous process feed comprises a heat transfer from the reactor effluent to the gaseous feed.

3. The process according to claim 1 or 2, further comprising preheating the oxidant prior to the firing, said preheating comprising a heat transfer of heat from a flue gas off flow from the firing.

4. The process according to claim 3, wherein the oxidant is heated to a temperature above 1000 °C.

5. The process according to claims 2 and 3 or 2 and 4, wherein the duty for the vaporizing, for the preheating the gaseous process flow, and for preheating the oxidant flow is supplied by residual heat from firing the fuel.

6. The process according to any of the preceding claims, wherein the fuel for the firing comprises one or more of: ammonia, hydrogen, and a mixture of hydrogen and nitrogen.

7. The process according to any of the preceding claims, further comprising ammonia slip removal from the reactor effluent yielding a purified reactor effluent and an ammonia enriched off flow, wherein ammonia from the off flow is recycled back to the reactor for processing and/or for firing.

8. The process according to any of the preceding claims, further comprising purifying the reactor effluent, preferably downstream the ammonia slip removal, said purification yielding a hydrogen enriched product flow at a desired purity and an off flow comprising at least nitrogen and hydrogen, wherein off flow is recycled back to reactor for firing.

9. The process according to any of the preceding claims, further comprising cracking a part, preferably up to 10%, of the ammonia in the preheated feed in a pre-reformer upstream the cracking reactor.

10. The process according to any of the preceding claims, comprising further cooling the comparatively cooled effluent flow prior to the ammonia slip removal at a recuperative heat recovery system comprising at least one heat exchanger that operates against boiling water.

11. The process according to any of the preceding claims, further comprising the steps of pumping and vaporizing liquid ammonia from a storage to a processing pressure, wherein a heat for the vaporizing is supplied by the heat duty from firing the fuel.

12. The process according any of the preceding claims further comprising recycling of formed hydrogen product back into the feed to the reactor, wherein a level of hydrogen in the feed is preferably in a range of 1-5 vol%.

13. A plant for performing a production process of hydrogen by cracking ammonia, preferably the process according to any of claims 1-12, the plant comprising at least
a recuperative cracking reactor comprising: a reaction zone; a combustion zone; and a recuperative heat exchanger, and
a preheater positioned upstream the reaction zone for preheating a gaseous process feed comprising ammonia, wherein
the reaction zone contains a catalyst for catalyzing a conversion of at least part of the ammonia comprised in the feed yielding a flow of a hot process mixture comprising hydrogen and nitrogen,
the combustion zone is in thermal contact with the reaction zone to provide a heat duty for the production process by firing a fuel in the presence of an oxidant,
the recuperative heat transfer zone is fluidly connected to an output of the reaction zone and wherein the recuperative heat transfer zone is configured to heat the feed at the reaction zone by a recuperative transfer of heat from the flow of the hot process mixture prior to releasing the process mixture as a reactor effluent from the reactor..

14. The plant according to claim 13, wherein the preheater is a heat exchanger configured to, in use, transfer heat from the reactor effluent to the gaseous feed for preheating the gaseous process feed and yielding a comparatively cooled effluent flow.

15. The plant according to claim 13 or 14, comprising a fired process heater comprising a combustion chamber and a convective section to recover heat from a flue gas off flow from the combustion chamber whereby the combustion zone, the reaction zone, and the recuperative heat exchanger, in fluid connection with the catalytic zone, are housed in the combustion chamber.

16. The plant according to any of claims 13-15, further comprising an oxidant preheater configured to preheat a flow of the oxidant prior to the firing using heat from a flue gas off flow from the firing.

17. The plant according to any of the preceding claims 13-16, wherein the preheater, the oxidant preheater, as wells as a heat exchanger vaporizer for vaporizing liquid ammonia are connected to receive a required heat duty from residual heat from firing of the fuel.

18. The plant according to any of the preceding claims 13-17, further comprising a processing section for purifying the effluent, the processing section comprising one or more of
an ammonia slip remover, yielding a purified effluent and an ammonia enriched off flow, and
an purifier, preferably downstream the ammonia slip remover, said purifier, yielding a hydrogen enriched product flow and a nitrogen enriched off flow comprising hydrogen,
and wherein the processing system is configured to recycle one or more ammonia enriched off flow and the nitrogen enriched off flow back to the cracking reactor for further processing and/or firing.

19. The plant according to claim 18, further comprising a cooler configured to further reduce a temperature of the comparatively cooled effluent flow upstream the processing section, said cooler comprising at least one heat exchanger that operates against boiling water.

20. The plant according to any of the preceding claims 13-19, further comprising a pre-reformer fluidly connected between the cracking reactor and the preheater, and configured crack a part, preferably up to 10%, of the ammonia in the preheated feed.

21. The plant according to any of the preceding claims 13-20, further comprising one or more pump and heat exchanger vaporizer for vaporizing liquid ammonia from a storage to a processing pressure, wherein a heat for the vaporizing is supplied by the heat duty from firing the fuel.

22. The plant according to any of the preceding claims 13-21, further comprising a recycle loop configured to recycle part of the formed hydrogen product back into the feed to the reactor.
